# EUROPEAN PATENT SPECIFICATION

(11) **EP 3 442 211 B1**
(45) Date of publication and mention of the grant of the patent: **10.03.2021**
(21) Application number: 18186639.3
(22) Date of filing: 31.07.2018
(51) Int. Cl.: H04N 1/00

(54) **READING DEVICE AND IMAGE FORMING APPARATUS INCORPORATING SAME**
LESEVORRICHTUNG UND BILDERZEUGUNGSVORRICHTUNG DAMIT
DISPOSITIF DE LECTURE ET APPAREIL DE FORMATION D'IMAGES LE COMPRENANT

(30) Priority: 09.08.2017 JP 2017154038
(43) Date of publication of application: 13.02.2019
(73) Proprietor: Ricoh Company, Ltd., Tokyo 143-8555 (JP)
(72) Inventor: NAGANO, Tatsuaki, Tokyo, 143-8555 (JP); HATAYAMA, Koji, Tokyo, 143-8555 (JP); NARAI, Satoshi, Tokyo, 143-8555 (JP); IMAKI, Daisuke, Tokyo, 143-8555 (JP); HORIKAWA, Toshiyuki, Tokyo, 143-8555 (JP); TADA, Kaoru, Tokyo, 143-8555 (JP); ANDOH, Takayuki, Tokyo, 143-8555 (JP); OSANAI, Yohei, Tokyo, 143-8555 (JP); HAGIWARA, Genta, Tokyo, 143-8555 (JP); YOUDA, Yasunobu, Tokyo, 143-8555 (JP)
(74) Representative: J A Kemp LLP

(56) References cited:
- CN-Y- 2 919 731
- JP-A- H08 245 018
- JP-A- 2003 069 792
- JP-A- 2003 298 808
- JP-A- 2009 118 068
- US-A1- 2007 171 487
- US-A1- 2017 155 785

## Description

### BACKGROUND

### Technical Field

Embodiments of the present disclosure relate to a reading device and an image forming apparatus incorporating the reading device.

### Related Art

A reading device is known that includes a reading unit to read a document fed by a feeder, and an image data acquisition unit to acquire image data indicating an image of the document read by the reading unit.

For example, JP-2010-141509-A discloses a reading apparatus which reads, by using a reading unit, a document fed by an automatic document feeder while the document is passing through a reading position of the reading unit. According to the reading device, a leading end and a trailing end of a document are detected by a sheet detection sensor. Reading is started when the leading end of the document passes a point a predetermined distance before the reading position. The reading is continued for a fixed distance of feeding of the document after the trailing end of the document passes the reading position. Thereafter, the reading ends. A document candidate area corresponding to a document surface is extracted from read data read by the reading unit. The extracted document candidate area is acquired as final image data.

The reading device described in JP-2010-141509-A is capable of acquiring document image data not including an outside area other than a document area, thereby meeting a demand for acquiring such image data from a user. However, some users desire to acquire image data including both the document area and the outside area outside the document area. In such a case, the reading device described in JP-2010-141509-A does not meet a demand from such users. On the other hand, there has been a conventional reading device capable of acquiring image data including both the document area and the outside area outside the document area. However, this conventional reading device cannot meet the demand from the user desiring to acquire document image data not including the outside area.

US 2017/155785 A1 and JP 2003 298808 A disclose background art to the present invention.

### SUMMARY

In an aspect of the present disclosure, there is provided a reading device as defined by the claims.

In another aspect of the present disclosure, there is provided an image forming apparatus as defined by the claims.

According to the present disclosure, both demands from a user desiring to acquire image data including a document area and an outside area outside the document area, and from a user desiring to acquire image data not including the outside area can be met.

### BRIEF DESCRIPTION OF THE SEVERAL VIEWS OF THE DRAWINGS

The aforementioned and other aspects, features, and advantages of the present disclosure would be better understood by reference to the following detailed description when considered in connection with the accompanying drawings, wherein:
FIG. 1 is a perspective view of a copier illustrated as an example of an image forming apparatus according to a first embodiment;
FIG. 2 is an explanatory diagram of a configuration of a reading device included in the copier;
FIG. 3 is a plan view of the reading device;
FIG. 4 is a schematic diagram of the reading device;
FIG. 5A is a perspective view of the reading device, illustrating a state in which a leading end of a card is inserted and set from an insertion opening with a bypass sheet feeding tray closed;
FIGS. 5B to 5D are perspective views of the reading device during use with the bypass sheet feeding tray opened;
FIG. 6 is a block diagram illustrating a main part of a control system that executes operation control and image processing of the copier;
FIG. 7 is a flowchart illustrating a flow of a processing operation performed when a card is set in the bypass sheet feeding tray or the insertion opening of the copier, and copied (duplicated);
FIG. 8A is an explanatory view illustrating a state in which the card being fed is skewed;
FIG. 8B is an explanatory view illustrating a state in which a part of an edge of the card (near four corners of a card) deviates from an area E read by a first reading unit; FIG. 8C is an explanatory view illustrating a state in which an image of the card whose edge is partially missing is formed on a recording sheet;
FIG. 9A is an explanatory view illustrating a state in which the card being fed is skewed;
FIG. 9B is an explanatory view illustrating a state in which a part of the edge of the card does not deviate from the area E read by the first reading unit; FIG. 9C is an explanatory view illustrating a state in which an image containing no missing part is formed on the recording sheet;
FIG. 10 is a schematic diagram illustrating a reading device included in a copier according to a second embodiment;
FIG. 11 is a block diagram illustrating a main part of a control system that executes operation control and image processing of the copier;
FIGS. 12A and 12B are explanatory diagrams illustrating an example of a document thickness sensor of the copier;
FIG. 13 is a flowchart illustrating a flow of a processing operation performed when a card is set in a bypass sheet feeding tray or an insertion opening, and copied (duplicated) according to the second embodiment;
FIG. 14 is an explanatory diagram illustrating an example of a document width detection sensor applicable to the copier;
FIG. 15 is a front view illustrating an insertion opening for card insertion in a state in which the bypass sheet feeding tray of the copier is closed;
FIG. 16 is a schematic diagram of a reading device according to a variation; and
FIG. 17 is a flowchart illustrating a flow of a processing operation performed when a card is copied (duplicated) in the variation.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

Referring now to the drawings, embodiments of the present disclosure are described below. In the drawings for explaining the following embodiments, the same reference codes are allocated to elements (members or components) having the same function or shape and redundant descriptions thereof are omitted below.

### First Embodiment

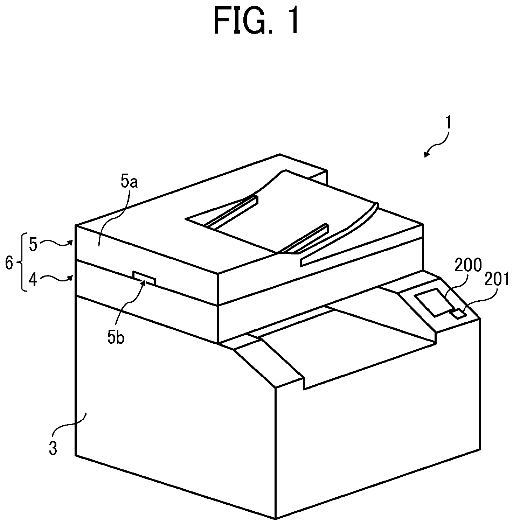

Hereinafter, an embodiment of the present disclosure (hereinafter referred to as "first embodiment") is described. FIG. 1 is a perspective view of a copier 1 which is an image forming apparatus according to the first embodiment. The copier 1 according to the first embodiment mainly includes an image forming unit 3, an image reader 4, and an automatic document feeder (hereinafter also abbreviated as "ADF") 5. A reading device 6 of the first embodiment mainly includes the image reader 4 and the ADF 5.

The image forming unit 3 according to the first embodiment is an electrographic image forming apparatus that includes, for example, an exposure unit as a latent image forming unit, a plurality of photoconductive drums as latent image bearers, developing devices which use toner in four colors of cyan (C), magenta (M), yellow (Y), and a black (K), an intermediate transfer unit, a secondary transfer unit, and a fixing device. The image forming unit 3 may be another type of image forming apparatus, such as an inkjet image forming apparatus.

The image forming unit 3 exposes the photoconductive drum for the respective colors by using the exposure unit, for example, based on image data acquired by image reading by the reading device 6, and image data transmitted from an external device such as a personal computer to form electrostatic latent images on the respective photoconductive drums. The image forming unit 3 further supplies toner to the latent images on the respective photoconductive drums to develop the latent images by using the developing devices for respective colors. The image forming unit 3 primarily transfers the toner images on the photoconductive drums for the respective colors onto an intermediate transfer belt of the intermediate transfer unit such that the toner images overlap each other on the intermediate transfer belt. Subsequently, the image forming unit 3 secondarily transfers the toner images onto a recording sheet as a recording material, which is fed from a sheet feed unit 2, by using the secondary transfer unit, and heats and presses the toner images on the recording sheet by using the fixing device to form a color image.

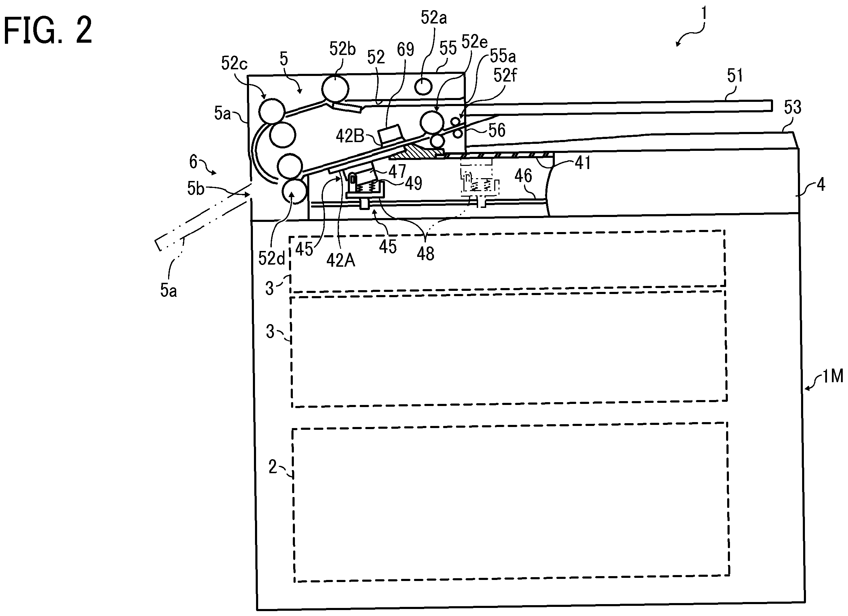

FIG. 2 is an explanatory diagram of a configuration of the reading device 6 according to the first embodiment. The reading device 6 is operable in either a document feeder (DF) scanner mode (fed document reading mode) for reading an image of a document being fed (document), or a flatbed scanner mode (placed document reading mode) for reading an image on a document surface of a document placed on a flat exposure glass.

In the flatbed scanner mode, the image reader 4 emits light to a document surface (surface to be read) of a document (e.g., document sheet, thick sheet, or book) on a flatbed exposure glass 41, and converts light reflected from the document surface into an image signal to read a document image.

In the DF scanner mode, the ADF 5 separates document sheets one by one from a document sheet bundle stacked on a document tray 51 corresponding to a setting portion, loads the document sheet into a document feeding path 52, and feeds the document sheet along the document feeding path 52. During feeding, the document surface of the document sheet (upper surface on document tray 51) sequentially and partially faces DF exposure glasses 42A and 42B of the image reader 4 from an upstream side part of the document sheet in a feeding direction. That is, the reading device 6 sequentially reads an image on a document sheet fed by the ADF 5 and placed on the DF exposure glasses 42A and 42B of the image reader 4 to operate as a DF scanner.

The ADF 5 is attached to a rear portion (back side portion) of an apparatus body 1M via an opening and closing mechanism such as a hinge. The ADF 5 is movable to an opened position to open an upper side of the flatbed exposure glass 41 for the apparatus body 1M, and a closed position to press the document on the flatbed exposure glass 41.

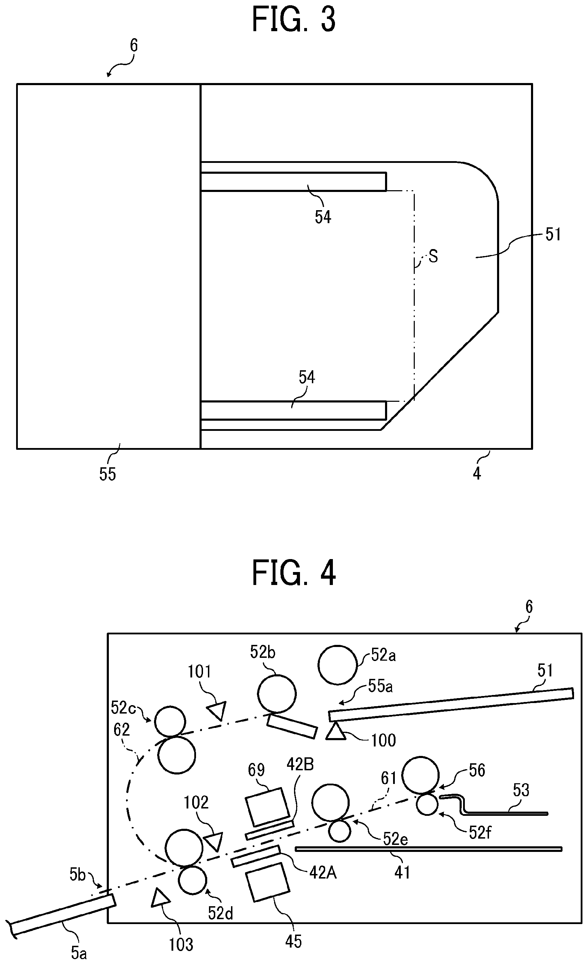

FIG. 3 is a plan view of the reading device 6. The document tray 51 includes a pair of left and right movable side guide plates 54 to position a document sheet S set on the ADF 5 in a sheet width direction orthogonal to a sheet feeding direction of the document sheet S. The side guide plates 54 are relatively movable toward and away from each other while aligning the document tray 51 with the center of the document sheet S in the width direction. However, the side guide plates 54 may be so disposed as to bring one edge of the document sheet S into contact with one edge side of the document tray 51, and may move the other edge of the document sheet S.

As illustrated in FIG. 2, the ADF 5 is covered by a cover 55 capable of opening and closing at least an upper side of the ADF 5. The cover 55 has a sheet feed opening 55a above a portion near a sheet feed side end of the document tray 51 to introduce a leading end of the document sheet S into the cover 55 through the sheet feed opening 55a. In addition, the cover 55 covers an upper side of the leading end portion of the document tray 51 to accommodate the leading end portion of the document tray 51 inside the sheet feed opening 55a. A main guide portion which forms the document feeding path 52 extending from the sheet feed opening 55a to an ejection port 56 in the ADF 5 is constituted by ribs or the like formed on the cover 55 or others.

When the reading device 6 operates as a flatbed scanner with a document sheet placed, the flatbed exposure glass 41 faces a lower surface (surface to be read) of the document sheet. When the reading device 6 operates as a DF scanner, the first DF exposure glass 42A faces a lower surface (surface to be read) of a document sheet passing through a predetermined reading position of the document feeding path 52. The first DF exposure glass 42A is inclined to the flatbed exposure glass 41 to form a preset inclination angle with respect to the flatbed exposure glass 41. When the reading device 6 operates as a DF scanner, the second DF exposure glass 42B faces an upper surface (surface to be read) of a document sheet passing through the predetermined reading position of the document feeding path 52.

A first reading unit 45 as a reading unit, and a guide rod 46 extending in the left and right direction in FIG. 2 are provided inside the image reader 4. The first reading unit 45 includes an integral optical scanning unit 47, a bracket 48 which holds the integral optical scanning unit 47, a plurality of compression coil springs (elastic members) 49 assembled in a compressed state between the integral optical scanning unit 47 and the bracket 48.

The integral optical scanning unit 47 functions as a close contact image sensor which includes an equal magnification imaging element roof mirror lens array, an optical path separation mirror, an equal magnification image sensor, an illumination light source and the like, all held in a mold frame, for example. The integral optical scanning unit 47 is capable of line-scanning an image in a main scanning direction with high resolution, and has a large depth of focus sufficient for handling image reading of a book document or the like. The integral optical scanning unit 47 is not limited to a specific type, but may be any type to handle a DF scanner and a flatbed scanner. The main scanning direction is a direction parallel to both the upper surface of the flatbed exposure glass 41 and the upper surface of the first DF exposure glass 42A (direction perpendicular to sheet surface of FIG. 2, and up-down direction in FIG. 3).

The integral optical scanning unit 47 is also guided to freely move in a sub-scanning direction by the guide rod 46 disposed on the lower side of the bracket 48. The upper part of the integral optical scanning unit 47 slidably contacts either one or both of the flatbed exposure glass 41 and the first DF exposure glass 42A in accordance with a position of the integral optical scanning unit 47 in the sub-scanning direction. The first reading unit 45 is therefore movable along the guide rod 46, but regulated in tilting around an axis of the guide rod 46.

The first reading unit 45 line-scans, in the main scanning direction, a surface to be read of a document sheet on the flatbed exposure glass 41, and moves in the sub scanning direction to read an image of the document sheet. The first reading unit 45 further line-scans, in the main scanning direction, an image of a document sheet passing above the first DF exposure glass 42A to read the image of the document sheet.

A timing belt having an endless loop shape is provided inside the image reader 4. The bracket 48 of the first reading unit 45 is fixed to a position of the timing belt in the circumferential direction of the timing belt. Further provided inside the image reader 4 are a plurality of timing pulleys around which the timing belt is wound without looseness, and a motor which rotationally drives any one of the timing pulleys, and others.

For performing a reading operation in the flatbed scanner mode, the first reading unit 45 moves toward the right in FIG. 2 from a home position near a stop position indicated by a solid line in FIG. 2, for example, while shifting from the home position toward one side in the sub-scanning direction. Subsequently, the first reading unit 45 executes line scanning by using the integral optical scanning unit 47 for each minute movement distance to read an image on a surface to be read (lower surface) of a document sheet on the flatbed exposure glass 41. When the reading operation is completed, the first reading unit 45 returns to the home position.

For performing a reading operation in the DF scanner mode, the first reading unit 45 reads an image on a surface to be read (lower surface) of a document sheet passing above the first DF exposure glass 42A at the home position (below first DF exposure glass 42A) indicated by the solid line in FIG. 2.

The first reading unit 45 is movable in the sub-scanning direction to be positioned on the lower side of the flatbed exposure glass 41 and on the lower side of the first DF exposure glass 42A. A posture of the integral optical scanning unit 47 switches to a horizontal first reading posture for reading an image through the flatbed exposure glass 41, or an inclined second reading posture for reading an image through the first DF exposure glass 42A in accordance with the position of the integral optical scanning unit 47 in the sub-scanning direction.

The ADF 5 includes a sheet ejection tray 53 corresponding to an ejecting portion on which document sheets after image reading are stacked. For downsizing, the document tray 51 and the sheet ejection tray 53 are overlapped with each other in the up-down direction in a state in which at least a part of the document tray 51 and the sheet ejection tray 53 are spaced apart from each other.

Next, the document feeding path 52 in DF scan is described below. The ADF 5 includes a pickup roller 52a and a separation roller 52b which separate the uppermost document sheet S one by one from a document sheet bundle placed on the document tray 51, and load the separated document sheet S into the document feeding path 52. The ADF 5 reverses the separated and loaded document sheet S such that the upper surface of the document sheet S faces downward, and feeds the document sheet S in the document feeding path 52 such that the document sheet S can pass through the upper surface of the DF exposure glass 42A. A plurality of pairs of feeding rollers (a pair of pull-up rollers 52c and a pair of reading entrance rollers 52d) is disposed in the document feeding path 52. Moreover, on the downstream side in the feeding direction with respect to these feeding rollers, a plurality of pairs of feeding rollers (a pair of reading exit rollers 52e and a pair of sheet ejection rollers 52f) is disposed. The numbers and positions of these pairs of rollers may be set to any numbers and positions in accordance with route setting conditions of the document feeding path 52, a length of the document sheet S of the minimum size in the feeding direction, and others.

When the integral optical scanning unit 47 is positioned at a position indicated by a solid line in FIG. 2, the first reading unit 45 repeatedly line-scans an image on the document sheet S being fed at the reading position by using the integral optical scanning unit 47 to read the document image. Thereafter, the document sheet S after image reading is ejected to the sheet ejection tray 53 by the pairs of feeding rollers (the pair of reading exit rollers 52e and the pair of sheet ejection rollers 52f).

The pickup roller 52a, the separation roller 52b, and the plurality of pairs of feeding rollers (the pair of pull-up rollers 52c, the pair of reading entrance rollers 52d, the pair of reading exit rollers 52e, and the pair of sheet ejection rollers 52f) constitute a feeder in cooperation with a driving motor which drives these rollers, a plurality of sensors disposed in the document feeding path 52, and a controller described below and performing feeding control based on detection information obtained by these sensors. The feeder loads a document sheet from the document tray 51 into the document feeding path 52, feeds the document sheet such that the document sheet can pass through the reading position, and ejects the document sheet onto the sheet ejection tray 53.

FIG. 4 is a schematic diagram of the reading device 6. For example, a document set sensor 100, a post-feed sensor 101, a reading entrance sensor (registration sensor) 102, a bypass document set sensor 103 and others are disposed in the ADF 5. Such sensors are sequentially disposed from the upstream side in the feeding direction for feeding the document sheet S on the document tray 51. The ordinary document sheet S is an easily bendable sheet, such as a plain sheet (copy sheet). A document sheet including such an easily bendable sheet is set on the document tray 51.

A feeding path portion of the document feeding path 52 from a nip position of the pair of reading entrance rollers 52d located on the upstream side in the feeding direction with respect to the first DF exposure glass 42A to the ejection port 56 constitutes a straight feeding path 61 extending substantially linearly along the DF exposure glasses 42A and 42B. The straight feeding path 61 feeds a document sheet fed from the document tray 51 by the plurality of pairs of feeding rollers (the pair of pull-up rollers 52c and the pair of reading entrance rollers 52d) such that the document sheet passes along an upper surface of the first DF exposure glass 42A (first reading position) and a lower surface of the second DF exposure glass 42B (second reading position).

The straight feeding path 61 is also used to feed a document sheet loaded from the bypass sheet feeding tray 5a such that the document sheet passes along the upper surface of the first DF exposure glass 42A (first reading position) and the lower surface of the second DF exposure glass 42B (second reading position). More particularly, the straight feeding path 61 is also used to feed a manually fed document sheet set on the bypass sheet feeding tray 5a in an opened state as indicated by virtual lines in FIG. 2, or a manually inserted document sheet set in an insertion opening 5b for card insertion formed in the bypass sheet feeding tray 5a in a closed state such that the document passes substantially linearly along the upper surface of the first DF exposure glass 42A (first reading position) and the lower surface of the second DF exposure glass 42B (second reading position).

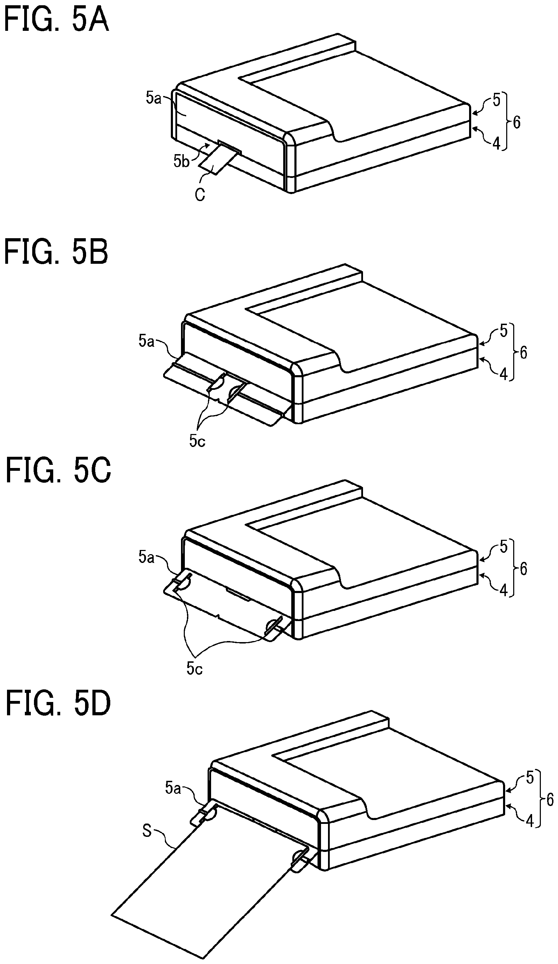

FIG. 5A is a perspective view of the reading device 6, illustrating a state in which a leading end of a card C as a document is inserted and set from the insertion opening 5b formed in the bypass sheet feeding tray 5a in the closed state of the bypass sheet feeding tray 5a. FIGS. 5B to 5D are perspective views of the reading device 6 during use with the bypass sheet feeding tray 5a opened. As illustrated in FIGS. 5B to 5D, a pair of side guides 5c are provided on the upper surface of the bypass sheet feeding tray 5a in the opened state. The pair of side guides 5c is movable relatively closer to and away from each other with the centers of the pair of side guides 5c aligned with each other in the sheet width direction. FIG. 5B illustrates a state in which the distance between the pair of side guides 5c is decreased, while FIG. 5C illustrates a state in which the distance between the pair of side guides 5c is increased. FIG. 5D illustrates a state in which the document sheet S is set on the upper surface of the bypass sheet feeding tray 5a in the opened state.

The card C is a hard sheet having higher flexural rigidity than flexural rigidity of the ordinary document sheet S, in particular a small size hard sheet, and is fed along the straight feeding path 61 so inclined as to be parallel to the upper surface of the first DF exposure glass 42A and the lower surface of the second DF exposure glass 42B. Examples of the small size hard sheet herein include standard size cards made of resin or thick paper, such as a driver's license, an identification (ID) card, a cash card such as a bank cash card, a credit card, and an electronic money card including a prepaid transportation card. Accordingly, the small size herein is a card size of, for example, any one of ID-1, ID-2 or ID-3 of ISO/IEC 7810 which is an international standard defining shapes of identification cards, or an equivalent size, for example. However, the length of the card size in the lateral direction is set to a length smaller than the length of the smallest size cut sheet in the lateral direction among standard cut sheet sizes set on the document tray 51.

The term "document sheet S" hereinafter refers to an ordinary document, such as a plain sheet (copy sheet), different from the card C to distinguish a document of the card C from an ordinary document, such as a plain sheet (copy sheet).

The path portion of the feeding path, through which the card C or the document sheet S set on the insertion opening 5b or the bypass sheet feeding tray 5a is fed, extends substantially linearly to reach the DF exposure glasses 42A and 42B, and further extends continuously and substantially linearly to the ejection port 56 to constitute the straight feeding path 61. The straight feeding path 61 joins a turn feeding path 62, which is a feeding path from the document tray 51, near an entrance of the pair of reading entrance rollers 52d.

For reading an image on the document sheet S set on the document tray 51, a start button 201 (see FIG. 1) provided on a control panel is pressed with the document sheet S set on the document tray 51 to sequentially draw out the document sheet S located uppermost on the document tray 51 toward the document feeding path 52 as illustrated in FIG. 4. Subsequently, the document sheet S is turned from the sheet feed opening 55a along the turn feeding path 62 indicated by an alternate long and short dashed line in FIG. 4, and reaches the pair of reading entrance rollers 52d. Thereafter, the image on the surface to be read is read by the first reading unit 45 while the document sheet S is passing through the upper surface of the first DF exposure glass 42A. For further reading an image on the other side of the document sheet S, the second reading unit 69 reads the image on the other side (surface to be read) while the document sheet S is passing through the reading position (second reading position) of the second reading unit 69. The document sheet S after image reading in this manner is ejected from the ejection port 56 toward the sheet ejection tray 53 by the pair of reading exit rollers 52e and the pair of sheet ejection rollers 52f.

On the other hand, when the insertion opening 5b or the bypass sheet feeding tray 5a is used, the straight feeding path 61 becomes the feeding path for the document. In such a case, the document can be fed without bending. Accordingly, an image on a document not desired to be bent, or on a document difficult to be bent is readable. More particularly, an image on a document smaller than the document of the minimum size set for the document tray 51 (e.g., postcard size), in particular, a hard sheet such as the card C described above, is readable. In addition, the intervals of the respective pairs of feeding rollers (the pair of reading entrance rollers 52d, the pair of reading exit rollers 52e, and the pair of sheet ejection rollers 52f) on the straight feeding path 61 in the feeding direction are set to be equal to or smaller than the longitudinal size (or lateral size) of the card C.

For reading an image on the card C, the bypass sheet feeding tray 5a is initially opened, and the card C is set on the upper surface of the bypass sheet feeding tray 5a. Alternatively, the card C is set in the insertion opening 5b with the bypass sheet feeding tray 5a closed. When the start button 201 provided on the control panel is pushed in this state, the card C is drawn toward the straight feeding path 61. Subsequently, the image on the surface to be read is read by the first reading unit 45 while passing through the upper surface of the first DF exposure glass 42A. For further reading an image on the other side of the card C, the second reading unit 69 reads the image on the other side (surface to be read) while the card C is passing through the reading position (second reading position) of the second reading unit 69. The card C after image reading in this manner is ejected from the ejection port 56 toward the sheet ejection tray 53 by the pair of reading exit rollers 52e and the pair of sheet ejection rollers 52f.

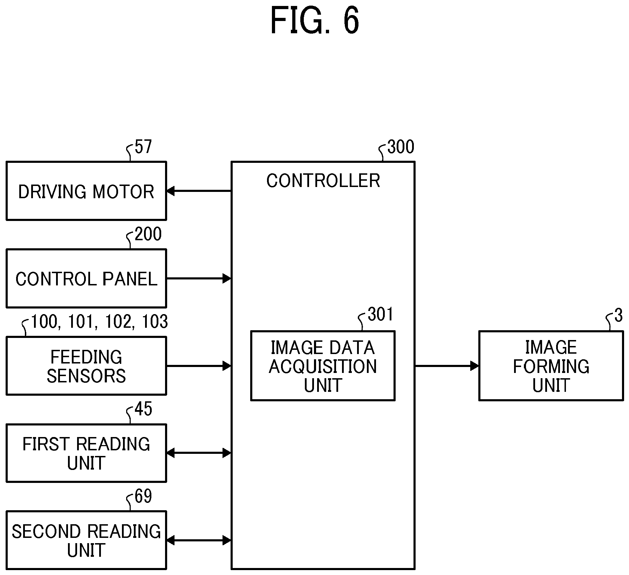

FIG. 6 is a block diagram illustrating a main part of a control system which executes operation control and image processing of the copier 1. Control and processing of the reading device 6 included in the copier 1 according to the first embodiment are mainly executed by a controller 300. The controller 300 includes a central processing unit (CPU), a read only memory (ROM), a random access memory (RAM), and others. For example, the CPU functions as an image data acquisition unit 301 corresponding to an image data acquisition unit which executes programs stored in the ROM or the like to control operations of respective units of the reading device 6 and thereby acquire image data indicating an image on the document sheet S or the card C. The RAM is used as a work area for the CPU.

The image data acquisition unit 301 controls a driving motor 57 and the like to drive the pickup roller 52a, the separation roller 52b, and the pairs of respective types of feeding rollers (the pair of pull-up rollers 52c, the pair of reading entrance rollers 52d, the pair of reading exit rollers 52e, and the pair of sheet ejection rollers 52f) to execute feeding control of the document sheet S and the card C based on detection results obtained by feeding sensors such as the document set sensor 100, the post-feed sensor 101, the reading entrance sensor 102, and the bypass document set sensor 103 to execute feeding control of the document sheet S and the card C. The image data acquisition unit 301 further controls operations of the first reading unit 45, such as movement control of the integral optical scanning unit 47, and reading operation of the integral optical scanning unit 47. The image data acquisition unit 301 further controls a reading operation of the second reading unit 69, for example.

The image data acquisition unit 301 further executes a mode corresponding to a selection operation performed by a user through a control panel 200 provided as a selector. When a first mode is selected by the selection operation from the user, the image data acquisition unit 301 executes a process for acquiring image data which indicates an area including not only an area of the document sheet S or the card C, but also an outside area located outside the area of the document S or card C, by using the first reading unit 45 and the second reading unit 69. When a second mode is selected by the selection operation from the user, the image data acquisition unit 301 executes a process for acquiring image data indicating the document sheet S or the card C and not including the outside area outside the document, by using the first reading unit 45 and the second reading unit 69.

The image data indicating the document sheet S and the card C acquired by the image data acquisition unit 301 is sent to a controller of the image forming unit 3, for example. The image forming unit 3 forms (prints) an image corresponding to the image data on a recording sheet. The image data indicating the document sheet S or the card C acquired by the image data acquisition unit 301 may be transmitted to an external device, rather than to the image forming unit 3 for printing.

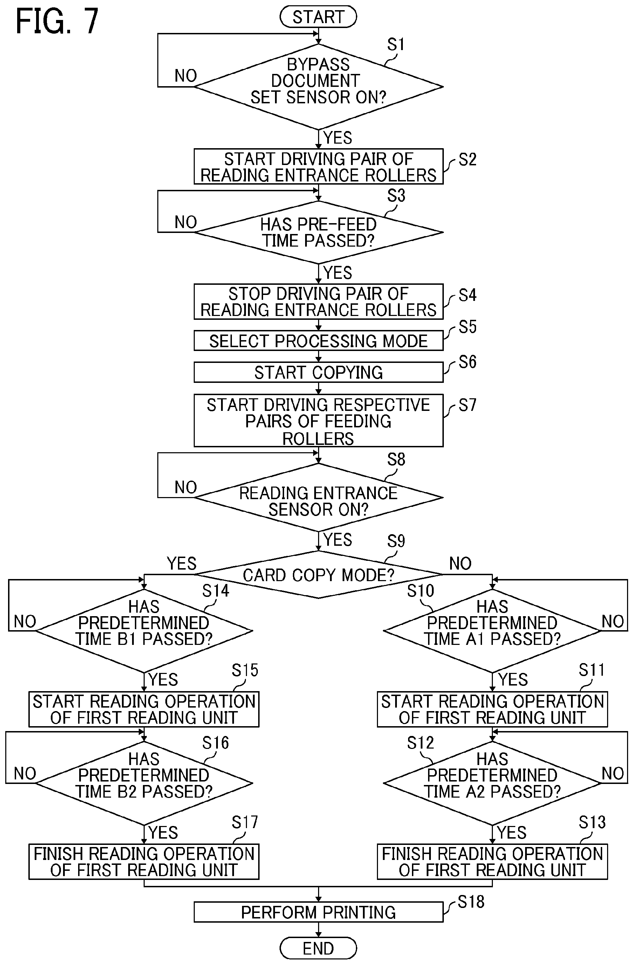

FIG. 7 is a flowchart illustrating a flow of a processing operation when the card C is set on the bypass sheet feeding tray 5a or the insertion opening 5b and copied (duplicated). When the card C is set on the bypass sheet feeding tray 5a or the insertion opening 5b of the ADF 5, the leading end of the card C contacts the pair of reading entrance rollers 52d. As a result, the bypass document set sensor 103 is turned on and detects the card C (SI: YES). The image data acquisition unit 301 implemented by the controller 300 waits for an elapse of a predetermined time to secure a time until the card C contacts against the pair of reading entrance rollers 52d after turn-on of the bypass document set sensor 103. Thereafter, the image data acquisition unit 301 starts driving of the pair of reading entrance rollers 52d (S2). After an elapse of a predetermined pre-feed time (S3: YES), the driving of the pair of reading entrance rollers 52d is stopped (S4). As a result, the leading end portion of the card C is held in a nipped state by the pair of reading entrance rollers 52d. At this time, the leading end of the card C has not reached the reading entrance sensor 102.

Subsequently, the image data acquisition unit 301 displays a mode selection screen on the control panel 200. The mode selection screen is a screen through which the user selects a mode. According to the first embodiment, buttons are displayed on the mode selection screen. The buttons are operated to select a plurality of modes including a card copy mode as a card reading mode corresponding to a first mode, and a plain sheet copy mode corresponding to a second mode.

The plain sheet copy mode is a mode which acquires image data indicating an area of a document not including an outside area outside the document by using the first reading unit 45 and the second reading unit 69, and prints an image on a recording sheet based on the acquired image data. The plain sheet copy mode according to the first embodiment acquires image data indicating an inner area at a distance of approximately 3 mm to 5 mm from the edge of the card C to reduce black streaks produced by a shadow of the edge of the card C and printed around an image portion of the card C. More particularly, in the plain sheet copy mode, the first reading unit 45 and the second reading unit 69 acquire image data indicating an inner area at a predetermined distance (e.g., approximately 3 mm to 5 mm) from a boundary between a document area and an outside area (margin area).

Examples of a method for acquiring image data indicating the inner area at a distance of approximately 3 mm to 5 mm from the edge of the card C include a method which controls the operations of the first reading unit 45 and the second reading unit 69 to acquire image data, and a method which processes image data read by the first reading unit 45 and the second reading unit 69.

For example, the former method controls the first reading unit 45 and the second reading unit 69 to start image reading when the card C is fed by approximately 3 mm to 5 mm after arrival of the leading end of the card C at the reading position of the first reading unit 45 and the second reading unit 69, and end image reading when the trailing end of the card C reaches a position approximately 3 mm to 5 mm before the reading position of the first reading unit 45 and the second reading unit 69. At this time, the reading width (reading length in main scanning direction) is set to read an area between positions approximately 3 mm to 5 mm inside from both end portions of the card C in the main scanning direction. According to this acquisition method, image data indicating an inner area at a distance of approximately 3 mm to 5 mm from the edge of the card C can be acquired from read data read by the first reading unit 45 and the second reading unit 69 without a necessity of a trimming process or the like.

For example, the latter method controls the first reading unit 45 and the second reading unit 69 to start image reading when the leading end of the card C reaches the reading position of the first reading unit 45 and the second reading unit 69, and end image reading when the trailing end of the card C reaches the reading position of the first reading unit 45 and the second reading unit 69. At this time, the reading width (reading length in main scanning direction) is set to read an area between positions approximately 3 mm to 5 mm inside from both end portions of the card C in the main scanning direction. Thereafter, an inner area at a distance of approximately 3 mm to 5 mm from the image edge of the read data read by the first reading unit 45 and the second reading unit 69 is trimmed. In this manner, image data indicating the inner area at a distance of approximately 3 mm to 5 mm from the edge of the card C can be acquired.

The card copy mode is a mode which acquires image data including the document and the outside area by using the first reading unit 45 and the second reading unit 69, and prints an image on a recording sheet based on the image data. The card copy mode is a mode for meeting a demand for securely copying the card C including the edge of the card C, when the card C is a card such as an insurance card and a driver's license card.

More particularly, a small-sized document (document) such as the card C often contains information up to an area near the edge of the document surface (surface to be read), and has substantially no margin to contain more information in a narrow document surface (surface to be read). In such a case, an area of approximately 3 mm to 5 mm from the edge of the document is missing when image data not including the outside area outside the document is acquired as in the foregoing plain sheet copy mode. In this condition, missing information near the edge may not be copied.

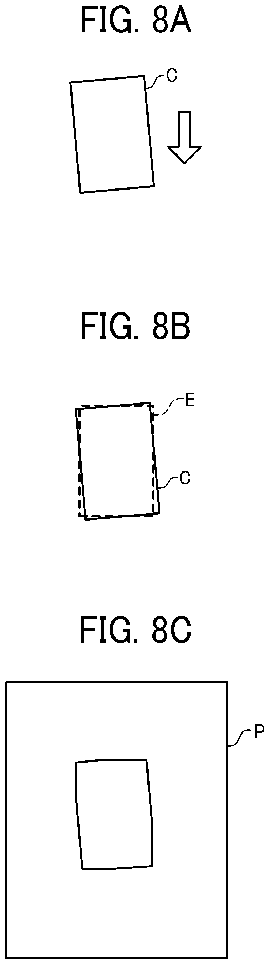

Even when acquired image data contains an exact area of the document without missing the area of approximately 3 mm to 5 mm from the edge of the document, an image near the edge of the document surface may be missing from the acquired image data due to various errors such as a feeding error and a reading error. In such a case, missing information near the edge may not be copied. In particular, as will be described later, the reading entrance sensor 102 corresponding to a reference for specifying the position of the card C in the feeding direction according to the first embodiment is disposed substantially at the center in the sheet width direction orthogonal to the feeding direction. Accordingly, a part of the edge of the card C (near four corners of card C) deviates from an area E (area surrounded by broken line in FIG. 8B) read by the first reading unit 45 as illustrated in FIG. 8B when the card C being fed is skewed as illustrated in FIG. 8A. As a result, an image formed on a recording sheet P has a missing part of the edge of the card C as illustrated in FIG. 8C.

The card copy mode of the first embodiment acquires image data indicating an area up to a position of approximately 10 mm outside from the edge of the card C. According to the first embodiment, the image data includes the outside area up to approximately 10 mm outside the document from the edge. However, the range of the image data included in the outside area from the edge of the document is appropriately set in consideration of a feeding error or a reading error. According to the card copy mode, the image data including both the card C and the outside area located outside the card C is acquired and printed. Accordingly, information near the edge of the card C can also be securely copied.

The card copy mode according to the first embodiment may be adopted not only for copying the card C, but also for copying the document sheet S larger in size than the card C, for example. Concerning the document sheet S of various sizes as well as the card C, black streaks produced by a shadow of the edge of the document sheet S are intentionally printed on a periphery of an image portion of the document sheet S. These black streaks increase the probability that the printed matter is not counterfeit data manufactured by image processing software of a personal computer, but a copy from the original document. Accordingly, reliability of originality of a copy increases.

When the user selects one of the copy modes through the mode selection screen displayed on the control panel 200 (S5), and performs a copy start operation (S6), the image data acquisition unit 301 starts driving of the respective pairs of feeding rollers (pair of reading entrance rollers 52d, pair of reading exit rollers 52e, and pair of sheet ejection rollers 52f) (S7). As a result, the card C is fed along the straight feeding path 61 with the leading end nipped by the nips of the pair of reading entrance rollers 52d. When the leading end of the card C reaches the reading entrance sensor 102, the reading entrance sensor 102 is turned on (S8: YES). The image data acquisition unit 301 specifies the leading end position and the trailing end position of the card C inside the straight feeding path 61, based on information on a feeding speed of the card C achieved by the respective pairs of feeding rollers (the pair of reading entrance rollers 52d, the pair of reading exit rollers 52e, and the pair of sheet ejection rollers 52f), with reference to a time when the reading entrance sensor 102 is turned on.

When the user selects the plain sheet copy mode in the processing step S5 (S9: NO), the image data acquisition unit 301 starts the reading operation of the first reading unit 45 (S11) after an elapse of a predetermined time A1 corresponding to a time required until a position 5 mm shifted toward the trailing end side from the leading end of the card C reaches the reading position of the first reading unit 45 (first reading position) after turn-on of the reading entrance sensor 102 (S10: YES). Thereafter, the reading operation of the first reading unit 45 ends (S13) after an elapse of a predetermined time A2 corresponding to a time required until a position 5 mm shifted toward the leading end side from the trailing end of the card C reaches the reading position of the first reading unit 45 (first reading position) after turn-on of the reading entrance sensor 102 (S12: YES). At this time, the image data acquisition unit 301 controls the reading operation of the first reading unit 45 to read a reading width (reading length in the main scanning direction) between positions 5 mm inside from both end portions of the card C in the main scanning direction.

The image data acquisition unit 301 performing this reading operation can acquire image data indicating an inner area at a distance of 5 mm from the edge of the card C based on the read data read by the first reading unit 45. Subsequently, the image data acquisition unit 301 sends the acquired image data to the controller of the image forming unit 3. The image forming unit 3 forms (prints) an image on a recording sheet based on the image data (S18). As a result, an image containing no black streak produced by a shadow of the edge of the card C is formed on the recording sheet. High-quality copying is therefore achievable.

On the other hand, when the user selects the card copy mode in the processing step S5 (S9: YES), the image data acquisition unit 301 starts the reading operation of the first reading unit 45 (S15) after an elapse of a predetermined time B1 corresponding to a time required until a position 10 mm before the leading end of the card C reaches the reading position of the first reading unit 45 (first reading position) after turn-on of the reading entrance sensor 102 (S14: YES). Thereafter, the reading operation of the first reading unit 45 ends (S17) after an elapse of a predetermined time B2 corresponding to a time required until a position 10 mm behind the trailing end of the card C reaches the reading position of the first reading unit 45 (first reading position) after turn-on of the reading entrance sensor 102 (S16: YES). At this time, the image data acquisition unit 301 controls the reading operation of the first reading unit 45 to read a reading width (reading length in the main scanning direction) between positions 10 mm outside from both end portions of the card C in the main scanning direction.

The image data acquisition unit 301 performing this reading operation can acquire image data indicating an area approximately 10 mm outside from the edge of the card C based on the read data read by the first reading unit 45. Subsequently, the image data acquisition unit 301 sends the acquired image data to the controller of the image forming unit 3. The image forming unit 3 forms (prints) an image on a recording sheet based on the image data (S18). As a result, an image including the card C and the outside area located outside the card C is formed on the recording sheet. Copying containing printed information near the edge of the card C can be therefore implemented.

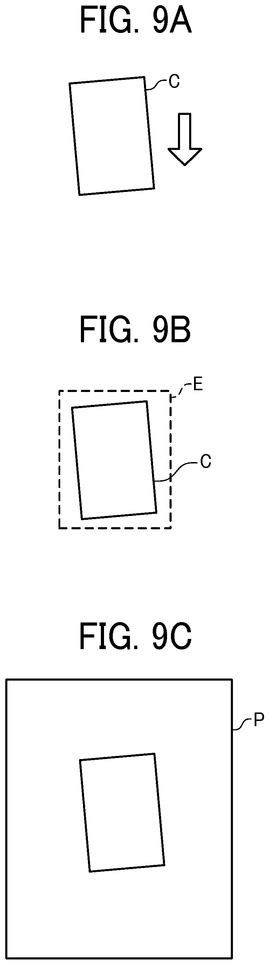

In particular, in the state in which the card copy mode is selected, the edge of the card C does not deviate from the area E (area surrounded by broken line in FIG. 9B) read by the first reading unit 45 as illustrated in FIG. 9B even when the card C being fed is skewed as illustrated in FIG. 9A. As a result, the image of the edge of the card C formed on the recording sheet P is not missing as illustrated in FIG. 9C. Accordingly, copying containing securely printed information near the edge of the card C is achievable.

Moreover, an image containing black streaks produced by a shadow of the edge of the card C is formed on the recording sheet. Accordingly, copying exhibiting high originality is achievable.

For image reading by using the second reading unit 69, processing is performed in a manner similar to the image reading by using the first reading unit 45.

Modes prepared according to the first embodiment include the "card copy mode" and the "plain sheet copy mode". When the "card copy mode" is selected, image data including the document area and the outside area located outside the document area is acquired. When the "plain sheet copy mode" is selected, image data not including the outside area outside the document (image data indicating area approximately 5 mm inside from edge of document) is acquired. However, modes to be prepared are not limited to these modes.

For example, a "margin acquisition mode" may be prepared as the first mode, and a "margin non-acquisition mode" may be prepared as the second mode. The "margin acquisition mode" performs a reading operation similar to the reading operation of the "card copy mode" described above, while the "margin non-acquisition mode" performs a reading operation similar to the reading operation of the "plain sheet copy mode" described above. However, the "card copy mode" can be selected in a case where the document size is equal to or smaller than a predetermined size (approximately equivalent to size of card C described above), while the "margin acquisition mode" can be selected in a case where the document size exceeds a predetermined size (approximately equivalent to size of card C described above).

More particularly, for example, the "card copy mode" or the "plain sheet copy mode" is selected in a case where a document is set in the insertion opening 5b, while the "margin acquisition mode" or "margin non-acquisition mode" is selected in a case where a document is set on the bypass sheet feeding tray 5a or the document tray 51. Alternatively, the "card copy mode" or "plain sheet copy mode" is selected in a case where a document is set in the bypass sheet feeding tray 5a or the insertion opening 5b (where document is fed using straight feeding path 61), while the "margin acquisition mode" or the "margin non-acquisition mode" is selected in a case where a document is set on the document tray 51 (where document is fed using turn feeding path 62).

For example, a "small size document reading mode" may be prepared as the first mode, while a "large size document reading mode" may be prepared as the second mode. The "small size document reading mode" performs a reading operation similar to the reading operation of the "card copy mode" described above, while the "large size document reading mode" performs a reading operation similar to the reading operation of the "plain sheet copy mode" described above. However, for example, the "card copy mode" is selected in a case where a document is set in the insertion opening 5b, while the "small size document reading mode" is selected in a case where a document is set in the bypass sheet feeding tray 5a or the document tray 51.

For example, a "thick sheet reading mode" may be prepared as the first mode, while a "plain sheet reading mode" may be prepared as the second mode. The "thick sheet reading mode" performs a reading operation similar to the reading operation of the "card copy mode" described above, while the "plain sheet reading mode" performs a reading operation similar to the reading operation of the "plain sheet copy mode" described above. However, for example, the "card copy mode" is selected in a case where a document is set in the insertion opening 5b, while the "thick sheet reading mode" is selected in a case where a document is set in the bypass sheet feeding tray 5a.

According to the first embodiment, a button for selecting the "card copy mode" as the first mode, and a button for selecting the "plain sheet copy mode" as the second mode are displayed on the mode selection screen shown on the control panel 200. The user operates one of the buttons to select a mode. However, the selection method is not limited to this method. For example, a button for switching between on and off of the "card copy mode" as the first mode may be displayed on the mode selection screen to select the "card copy mode" in response to on-operation of the button by the user, or select the "plain sheet copy mode" in response to off-operation of the "card copy mode" by the user.

According to the first embodiment, any name may be given to each mode. For example, "card mode", "card reading mode", "card scan mode", "hard document mode" or other names may be adopted instead of the "card copy mode" described above.

### Second Embodiment

Described hereinafter is another embodiment of the present disclosure (hereinafter referred to as "second embodiment"). According to the first embodiment described above, the user needs to carry out work for operating the control panel 200, and selecting the card copy mode at the time of copying the card C in the card copy mode. According to the second embodiment, the card copy mode is selected in accordance with a result of determination of a type of document (document) to eliminate the need of the foregoing work performed by the user. Basic configuration and operation of the copier 1 according to the second embodiment are similar to the basic configuration and operation of the first embodiment described above. Accordingly, following description mainly focuses on configuration and operation different from the corresponding configuration and operation of the first embodiment described above.

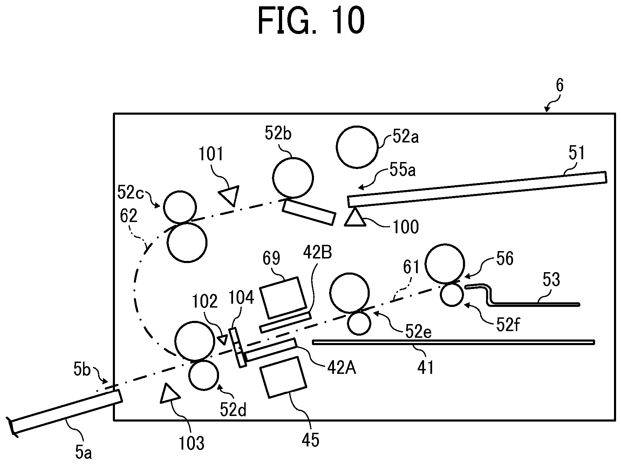

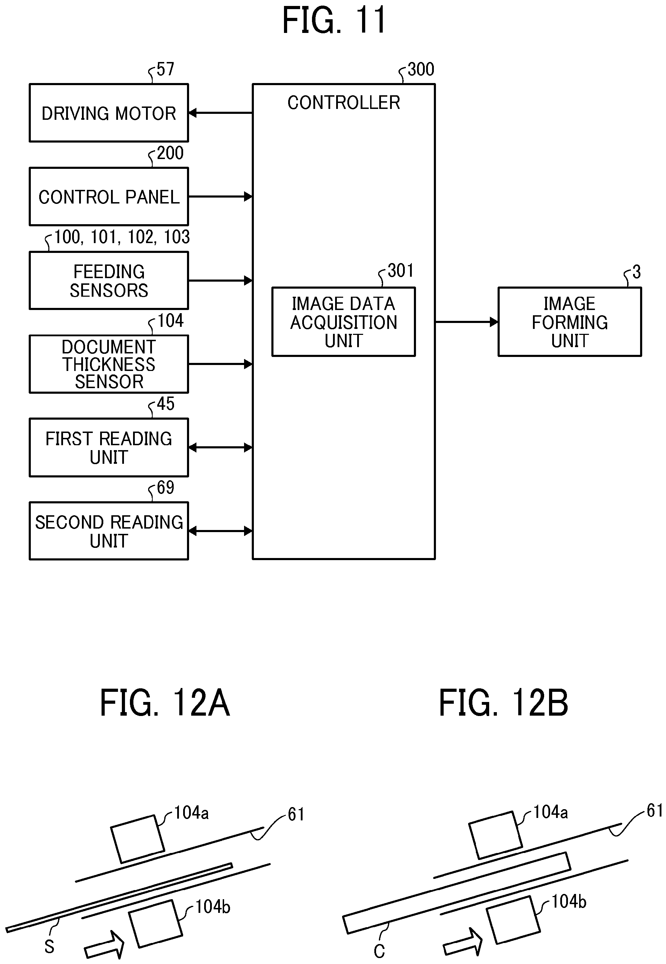

FIG. 10 is a schematic diagram of the reading device 6 according to the second embodiment. FIG. 11 is a block diagram illustrating a main part of a control system in the second embodiment. According to the second embodiment, a document thickness sensor 104 as a determination unit is provided to determine a type of document (card C) for which the card copy mode is preferably selected. The thickness of the card C which is small and made of plastic is designated as 0.76 mm according to the international standard. The thickness of the plastic card C which does not conform to the international standard but has been widely used is approximately 0.4 mm even for a relatively thinner card. A business card is also regarded as the card C small in size and for which the card copy mode is preferably selected. Generally, a business card has a thickness of approximately 0.3 mm. On the other hand, the thickness of the ordinary document sheet S, such as a plain sheet (copy sheet), is approximately 0.1 mm. Even the thickness of a relatively thick 110K sheet is approximately 0.16 mm. Accordingly, a difference between the card C, for which the card copy mode is preferably selected, and the document sheet S for which the plain sheet copy mode is preferably selected, can be determined based on a thickness difference.

According to the second embodiment, the document thickness sensor 104 is disposed on the downstream side with respect to the reading entrance sensor 102 in the feeding direction, and on the upstream side with respect to the reading position of the first reading unit 45 in the feeding direction. When a thickness of a document detected by the document thickness sensor 104 exceeds a predetermined threshold, the image data acquisition unit 301 determines that the document is the card C, and selects the card copy mode. When a thickness of a document detected by the document thickness sensor 104 does not exceed the predetermined threshold, the image data acquisition unit 301 determines that the document is the document sheet S, and selects the plain sheet copy mode.

FIGS. 12A and 12B are explanatory diagrams illustrating an example of the document thickness sensor 104. The document thickness sensor 104 illustrated in FIGS. 12A and 12B is an example of an ultrasonic thickness sensor (ultrasonic sensor). The document thickness sensor 104 is disposed such that the straight feeding path 61 is sandwiched between an ultrasonic transmitter 104a and an ultrasonic receiver 104b in the sheet surface normal direction. When the thin document sheet S which is thin and made of paper passes between the ultrasonic transmitter 104a and the ultrasonic receiver 104b, ultrasonic waves transmitted from the ultrasonic transmitter 104a pass through the document sheet S with small attenuation, exhibiting an attenuation factor of approximately 15%.

On the other hand, when the card C made of plastic passes between the ultrasonic transmitter 104a and the ultrasonic receiver 104b, ultrasonic waves transmitted from the ultrasonic transmitter 104a pass through the card C with an attenuation factor of approximately 90%. When a business card passes, an attenuation factor becomes approximately 55%.

In consideration of the above description, a threshold of the attenuation factor is set to 35%, for example. In such a case, the image data acquisition unit 301 determines that the document is the card C and selects the card copy mode when the attenuation factor detected by the document thickness sensor 104 exceeds 35%. On the other hand, the image data acquisition unit 301 determines that the document is the document S and selects the plain sheet copy mode when the attenuation factor detected by the document thickness sensor 104 does not exceed 35%.

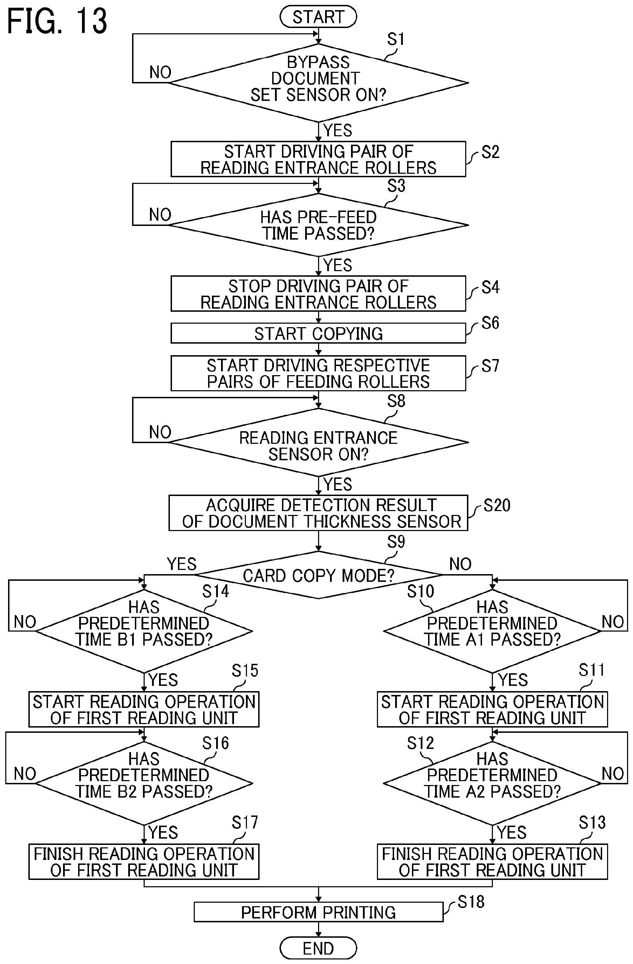

FIG. 13 is a flowchart illustrating a flow of a processing operation when the card C is set on the bypass sheet feeding tray 5a or the insertion opening 5b and copied (duplicated) according to the second embodiment. In the processing operation according to the second embodiment, the processing step S5 for selecting one of the copy modes by the user, which is required in the first embodiment described above, is not required as illustrated in FIG. 13. On the other hand, in response to a copy start operation by the user (S6), driving of the respective pairs of feeding rollers (the pair of reading entrance rollers 52d, the pair of reading exit rollers 52e, and the pair of sheet ejection rollers 52f) is started (S7). After the reading entrance sensor 102 is turned on by arrival of the leading end of the card C at the reading entrance sensor 102 (S8: YES), the image data acquisition unit 301 acquires a detection result (e.g., attenuation factor) of the document thickness sensor 104 (S20). The image data acquisition unit 301 selects the card copy mode when the detection result exceeds a predetermined threshold (S9: YES). The image data acquisition unit 301 selects the plain sheet copy mode when the detection result does not exceed the predetermined threshold (S9: NO).

According to the example described in the second embodiment, the difference between the card C, for which the card copy mode is preferably selected, and the document sheet S, for which the plain sheet copy mode is preferably selected, is determined based on the thickness difference of the documents. However, the difference between the documents may be determined based on other differences. For example, the difference between the card C for which the card copy mode is preferably selected, and the document sheet S for which the plain sheet copy mode is preferably selected may be determined based on a width difference (length in width direction) of the documents. Generally, the size of the card C is approximately 54 mm × 85.6 mm specified in ID-1 of the international standard ISO/IEC 7810. The size of a business card is approximately 55 mm × 91 mm, which is smaller in size than the document sheet S such as a copy sheet (plain sheet).

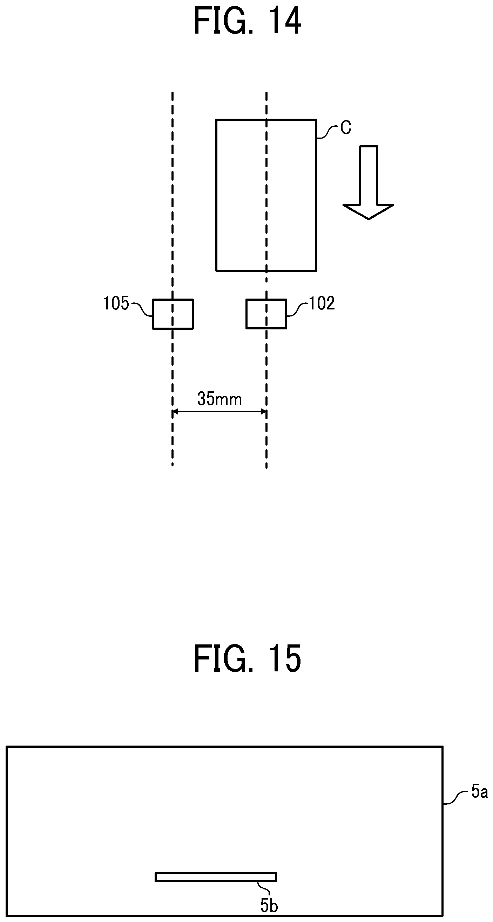

FIG. 14 is an explanatory diagram illustrating an example of the document width detection sensor 105 as the determination unit. FIG. 14 is a diagram of a part of the straight feeding path 61 as viewed in the sheet surface normal direction of the document. The document width detection sensor 105 illustrated in FIG. 14 is disposed at the same position in the sub-scanning direction as the position of the reading entrance sensor 102 disposed in the center of the straight feeding path 61 in the document width direction. The position of the document width detection sensor 105 in the width direction is located at a distance from the center of the straight feeding path 61 in the width direction of the document. This distance is longer than the half of the width of the card C, and shorter than the half of the width of the document sheet S of the minimum size.

When the document width detection sensor 105 thus configured is in an off-state in an on-state of the reading entrance sensor 102, it is determined that the document is the card C. When the document width detection sensor 105 is in an on-state, it is determined that the document is the document sheet S.

The length of the document in the feeding direction can be specified based on an on-time of the reading entrance sensor 102 (time from detection of document by reading entrance sensor 102 until non-detection of document, i.e., time from arrival of leading end of document at reading entrance sensor 102 until leaving of trailing end of document). Accordingly, the difference between the card C for which the card copy mode is preferably selected, and the document sheet S for which the plain sheet copy mode is preferably selected may be determined based on the difference in the on-time of the reading entrance sensor 102. For example, when the on-time of the reading entrance sensor 102 does not exceed a threshold corresponding to a time required for 95 mm, which is a length of the document in the feeding direction, it is determined that the document is the card C. When the on-time exceeds the threshold, it is determined that the document is the document sheet S.

A document may be determined to be the card C when both a detection result of the length of the document in the width direction obtained by the document width detection sensor 105, and a detection result of the length of the document in the feeding direction obtained based on the on-time of the reading entrance sensor 102 meet determination conditions of the card C. In such a case, the card C can be determined with high determination accuracy. Alternatively, a document may be determined to be the card C when one of these detection results meets the determination conditions of the card C.

According to the example described in the second embodiment, the difference between the card C for which the card copy mode is preferably selected, and the document sheet S for which the plain sheet copy mode is preferably selected is determined by using the document thickness sensor 104, the document width detection sensor 105, or the reading entrance sensor 102. However, determination may be made without using these sensors.

FIG. 15 is a front view illustrating the insertion opening 5b for card insertion in a state in which the bypass sheet feeding tray 5a is closed. Examples of the size of the document allowed to be fed using the bypass sheet feeding tray 5a include the size of the card C, and also the size of the ordinary document sheet S. On the other hand, the card insertion opening 5b for card insertion used in a state in which the bypass sheet feeding tray 5a is closed has a larger length in the document width direction than the length of the card C, and smaller than the length of the document sheet S of the minimum size. In such a case, the card C can be set in the insertion opening 5b, but the document sheet S cannot be set in the insertion opening 5b.

Accordingly, an opening-and-closing sensor which detects opening and closing of the bypass sheet feeding tray 5a is provided. When the bypass document set sensor 103 is turned on in a state in which the opening-and-closing sensor detects a closed state of the bypass sheet feeding tray 5a, it is determined that a document has been set in the insertion opening 5b. The document allowed to be set in the insertion opening 5b in this condition is the card C. Accordingly, the document is determined to be the card C, and the card copy mode is selected. On the other hand, when the bypass document set sensor 103 is turned on in a state in which the opening-and-closing sensor detects an opened state of the bypass sheet feeding tray 5a, it is determined that a document has been set on the bypass sheet feeding tray 5a. The document allowed to be set on the bypass sheet feeding tray 5a in this condition includes the document sheet S. Accordingly, the document is determined to be the document sheet S, and the plain sheet copy mode is selected.

In case of a configuration which eliminates the bypass sheet feeding tray 5a and includes the insertion opening 5b, it is determined that a document has been set in the insertion opening 5b when the bypass document set sensor 103 is turned on. In such a case, the document is determined to be the card C, and the card copy mode is selected.

### Variation

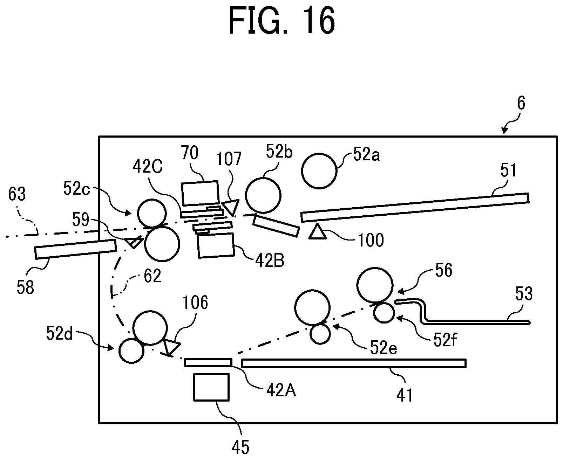

A variation of the first and second embodiments described above is now described. FIG. 16 is a schematic diagram of the reading device 6 in the present variation. According to the present variation, the straight feeding path 63 extending substantially linearly to feed the card C is provided between the document tray 51 and a sheet ejection table 58 provided separately from the sheet ejection tray 53. More particularly, for reading the card C, the card C is set on the bypass sheet feeding tray 5a or the insertion opening 5b in the first and second embodiments described above. However, in the present variation, the card C is set on the document tray 51.

According to the present variation, configuration and feeding route for feeding the card C are different from the corresponding configuration and feeding path in the first and second embodiments described above. However, the mode selection and reading operation described in the first embodiment and the second embodiment are applicable to the present variation. Hereinafter described by way of example is a case where the mode selection and the reading operation of the first embodiment described above are applied.

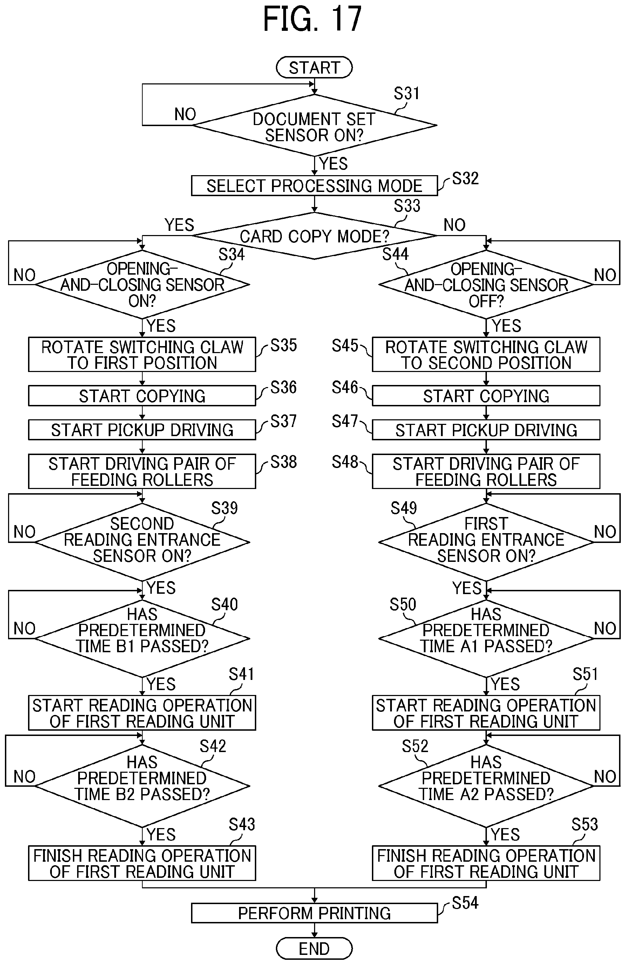

FIG. 17 is a flowchart illustrating a flow of a processing operation performed when the card C is copied (duplicated) in the present variation. For reading the card C, the card C is set on the document tray 51 of the ADF 5. The leading end of the card C contacts the separation roller 52b. The document set sensor 100 is turned on and detects the card C (S31: YES) as illustrated in FIG. 17. When the document set sensor 100 is turned on, the image data acquisition unit 301 displays a mode selection screen on the control panel 200 to receive mode selection from the user similarly to the first embodiment described above. The user thus selects one of the copy modes through the mode selection screen displayed on the control panel 200 (S32).

When the user selects the card copy mode (S33: YES), the sheet ejection table 58 is opened before or after the card C is set on the document tray 51 as illustrated in FIG. 16. At this time, an opening-and-closing sensor of the sheet ejection table 58 is turned on (S34: YES), and a detection result of the opening-and-closing sensor is transmitted to the image data acquisition unit 301 implemented by the controller 300. The image data acquisition unit 301 having received the detection result controls a switching claw 59 disposed on the downstream side with respect to the pair of pull-up rollers 52c in the feeding direction in the straight feeding path 63 to rotate the switching claw 59 to a first position (S35). As a result, the card C having passed through the pair of pull-up rollers 52c passes above the switching claw 59 along the straight feeding path 63 without change, and comes into a state ejectable to the sheet ejection table 58.

When the user performs a copy start operation (S36), the image data acquisition unit 301 drives the pickup roller 52a and the separation roller 52b (S37) to load the card C on the document tray 51 into the straight feeding path 63. The image data acquisition unit 301 further starts driving of the pair of feeding rollers (pair of pull-up rollers 52c) (S38). When the leading end of the card C reaches the second reading entrance sensor 107, the second reading entrance sensor 107 is turned on (S39: YES). The image data acquisition unit 301 specifies the leading end position and the trailing end position of the card C in the straight feeding path 61 based on the information on the feeding speed of the card C with reference to a time at which the second reading entrance sensor 107 is turned on.

Thereafter, the image data acquisition unit 301 performs the reading operation in the card copy mode (S40 to S43) similarly to the first embodiment described above. As a result, the image data acquisition unit 301 acquires, from read data read by the second reading unit 69, image data indicating an area approximately 10 mm outside from the edge of the surface to be read of the card C (lower surface of card C on document tray 51). Subsequently, the image data acquisition unit 301 sends the acquired image data to the controller of the image forming unit 3. The image forming unit 3 forms (prints) an image on a recording sheet based on the image data (S54). As a result, an image including the card C and the outside area located outside the card C is formed on the recording sheet. Copying containing printed information near the edge of the card C can be therefore implemented.

For executing card copy mode for both sides of the card C, a third reading unit 70 reads an image on the surface to be read (upper surface of card C on document tray 51) while the card C is passing through a lower surface of a third DF exposure glass 42C. In such a case, a reading operation similar to the reading operation using the second reading unit 69 is performed.

On the other hand, for copying the ordinary document sheet S, the user selects the plain sheet copy mode (S33: NO). In such a case, the sheet ejection table 58 is closed (S44), and the switching claw 59 is rotated to a second position (S45). The switching claw 59 in this condition is so positioned as to close a route of the straight feeding path 63. The document sheet S having passed through the pair of pull-up rollers 52c is guided by the switching claw 59 and sent to the turn feeding path 62 (S47 and S48).

Thereafter, an image on the surface to read of the document sheet S (upper surface of document sheet S on document tray 51) is read by the first reading unit 45 while the document sheet S is passing above the upper surface of the first DF exposure glass 42A similarly to the first embodiment described above, in a state fed through the turn feeding path 62 by the pair of reading entrance rollers 52d, the pair of reading exit rollers 52e, and the pair of sheet ejection rollers 52f (S49 to S53). A control reference for the reading operation of the document sheet S at this time is a time at which the first reading entrance sensor 106 detects the leading end or the trailing end of the document sheet S. As a result, the image data acquisition unit 301 acquires, from read data read by the first reading unit 45, image data indicating an inner area at a distance of approximately 5 mm from the edge of the surface to be read of the document sheet S (upper surface of document sheet S on document tray 51). Subsequently, the image data acquisition unit 301 sends the acquired image data to the controller of the image forming unit 3. The image forming unit 3 forms (prints) an image on a recording sheet based on the image data (S54). As a result, an image containing no black streak produced by a shadow of the edge of the document sheet S is formed on the recording sheet. High-quality copying is therefore achievable.

For executing card copy mode for both sides of the document sheet S, an image on the surface to be read (lower surface of document sheet S on document tray 51) is read by the second reading unit 69 while the document sheet S is passing through the upper surface of the second DF exposure glass 42B. A control reference for the reading operation of the document sheet S at this time is a time at which the second reading entrance sensor 107 detects the leading end or the trailing end of the document sheet S.

According to the present variation, the first reading unit 45 is an image sensor using a solid-state image pickup element such as a charge-coupled device (CCD), while each of the second reading unit 69 and the third reading unit 70 is a contact image sensor (CIS). The first reading unit 45 is used for image reading of the ordinary document sheet S. Accordingly, the first reading unit 45 is preferably constituted by an image sensor including a solid-state image pickup element which has high color reproducibility of read image and is easy to focus throughout a document.

The above description is presented merely by way of example. Characteristic effects are offered for each of following aspects.

### Aspect A

A reading device, such as the reading device 6, includes: a reading unit, such as the reading units 45, 69, and 70, to read a document, such as the document sheet S and the card C fed by a feeder, such as the respective types of rollers (the pickup roller 52a, the separation roller 52b, the pair of pull-up rollers 52c, the pair of reading entrance rollers 52d, the pair of reading exit rollers 52e, and the pair of sheet ejection rollers 52f), and the driving motor 57; and an image data acquisition unit, such as the image data acquisition unit 301, to acquire image data indicating the document read by the reading unit. The image data acquisition unit acquires image data in a mode selected in accordance with a predetermined selection condition from a plurality of modes including a first mode, such as the card copy mode, for acquiring image data including a document area of the document and an outside area other than the document area, and a second mode, such as the plain sheet copy mode, for acquiring image data indicating an area not including the outside area. According to aspect A, image data including the document area and the outside area outside the document area is acquired when the first mode is selected in accordance with the predetermined selection condition. Image data indicating an area not including the outside area outside the document is acquired when the second mode is selected in accordance with the predetermined selection condition. Accordingly, demands from both a user desiring to acquire image data including the document area and the outside area outside the document area, and a user desiring to acquire image data indicating the area not including the outside area can be met.

### Aspect B

The reading device in aspect A includes a selector, such as the control panel 200, to select a mode. The image data acquisition unit acquires image data in a mode selected by a user from the first mode and the second mode by using the selector. According to aspect B, a mode is selected in accordance with an instruction operation performed by the user using the selector. Accordingly, image reading is achievable in a mode appropriately reflecting a demand from the user.

### Aspect C

The first mode in aspect B includes a card reading mode for reading a document in a form of a card. According to aspect C, image data including the document area and a margin area (outside area) of the document is acquired when the user selects the "card reading mode" for reading the document in the form of the card by using the selector. Accordingly, a demand from a user for securely acquiring data up to an end portion of the card document can be met at the time of reading of the card. Moreover, the user selecting this mode by using the selector with display of characters such as "card reading mode" can intuitively select the mode for reading the document in the form of the card. Accordingly, the apparatus provided herein is an apparatus excellent in operability of mode selection.

### Aspect D

The first mode in aspect B includes a margin acquisition mode for reading a document and a margin portion of the document. According to aspect D, image data including the document area and the margin area (outside area) is acquired when the user selects the "margin acquisition mode" for reading the margin area (outside area) of the document together with the document area. Accordingly, a demand from a user for securely acquiring data up to the end portion of the document can be met. Moreover, the user selecting this mode by using the selector with display of characters such as "margin acquisition mode" can intuitively select the mode for reading the margin area (outside area) of the document together with the document area. Accordingly, the apparatus provided herein is an apparatus excellent in operability of mode selection.

### Aspect E

The first mode in aspect B includes a thick sheet reading mode for reading a document having a thickness equal to or larger than a predetermined thickness. According to aspect E, image data including the document area and the margin area (outside area) of the document is acquired when the user selects the "thick sheet reading mode" by using the selector for reading the document having a thickness equal to or larger than the predetermined thickness. Accordingly, a demand from the user for securely acquiring data up to the end portion of the document can be met at the time of reading of the document having a thickness equal to or larger than the predetermined thickness. Moreover, the user selecting this mode by using the selector with display of characters such as "thick sheet reading mode" can intuitively select the mode for reading the document having a thickness equal to or larger than the predetermined thickness. Accordingly, the apparatus provided herein is an apparatus excellent in operability of mode selection.

### Aspect F

The first mode in aspect B includes a small size document reading mode for reading a document of a size equal to or smaller than a predetermined size. According to aspect F, image data including the document area and the margin area (outside area) of the document is acquired when the user selects the "small size document reading mode" by using the selector for reading the document of a size equal to or smaller than the predetermined size. Accordingly, a demand from a user for securely acquiring data up to the end portion of the document can be met at the time of reading the document having a size equal to or smaller than the predetermined size. Moreover, the user selecting this mode by using the selector with display of characters such as "small size document reading mode" can intuitively select the mode for reading the document having a size equal to or smaller than the predetermined size. Accordingly, the apparatus provided herein is an apparatus excellent in operability of mode selection.

### Aspect G

The reading device in aspect A includes a determination unit, such as the document thickness sensor 104 and the document width detection sensor 105, to determine a type of document. The image data acquisition unit acquires image data in a mode selected from the first mode and the second mode in accordance with a determination result obtained by the determination unit. According to aspect G, a necessity of performing an instruction operation by a user is eliminated at the time of selection of a mode. Accordingly, labor of the user decreases.

### Aspect H

The determination unit in aspect G is a thickness detector, such as the document thickness sensor 104, to detect a thickness of a document. The image data acquisition unit acquires image data in the first mode when a thickness of a document detected by the thickness detector is equal to or larger than a predetermined thickness. Generally, information provided for a document having a thickness equal to or larger than a predetermined thickness is often contained up to a portion near the edge of the document with substantially no margin to provide more information within a narrow document surface. According to aspect H, image data without missing part of information near the edge can be acquired while reducing labor of the user in case of the foregoing type of document having a thickness equal to or larger than the predetermined thickness.

### Aspect I

The determination unit in aspect G is a size detector, such as the document width detection sensor 105, to detect a size of a document. The image data acquisition unit acquires image data in the first mode when a size of a document detected by the size detector is equal to or smaller than a predetermined size. According to aspect I, image data without missing part of information near the edge can be acquired while reducing labor of the user in case of a document of a size equal to or smaller than the predetermined size, which often contains information up to a portion near the edge of the document with substantially no margin to provide more information within a narrow document surface.

### Aspect J

The reading device in aspect I includes a first setting portion, such as the insertion opening 5b, at which setting of a document fed by the feeder and larger in size than the predetermined size is regulated, and a second setting portion, such as the document tray 51, at which the document larger in size than the predetermined size is set. The size detector detects that a size of a document fed by the feeder is equal to or smaller than the predetermined size when the document is set at the first setting portion. The size detector detects that a size of a document fed by the feeder is larger than the predetermined size when the document is set at the second setting portion. According to aspect J, a document of a size equal to or smaller than the predetermined size is detectable by an easy configuration.

### Aspect K

In the reading device according to any one of aspects A to J, a feeding path portion for a document (for example, a downstream portion of the straight feeding path 61 in a feeding direction) from a reading position of the reading unit to a predetermined ejecting portion, such as the ejection port 56, extends substantially linearly. A setting portion at which a document is set, such as the bypass sheet feeding tray 5a and the insertion opening 5b, is disposed on an extension line of another feeding path portion (for example, an upstream portion of the straight feeding path 61 in the feeding direction) linearly extending upstream of the feeding path portion from the reading position in the feeding direction. According to aspect K, as described in the first and second embodiments, the document is fed from the setting portion through the reading position of the reading unit to the predetermined ejecting portion without bending a document having high rigidity and difficult to feed with bending, such as the card C.

### Aspect L

In the reading device according to any one of aspects A to J, a feeding path portion for a document (for example, an upstream portion of the straight feeding path 63 in a feeding direction) from a predetermined setting portion, such as the document tray 51, to a reading position of the reading unit extends substantially linearly. An ejecting portion for a document, such as the sheet ejection table 58, is provided on an extension line of another feeding path portion (for example, a downstream side portion of the straight feeding path 63 in the feeding direction) linearly extending downward of the feeding path portion from the reading position in the feeding direction. According to aspect L, as described in the variation, the document is fed from the setting portion through the reading position of the reading unit to the predetermined ejecting portion without bending a document having high rigidity and difficult to feed with bending, such as the card C.

### Aspect M

In the reading device according to any one of aspects A to L, the image data acquisition unit acquires image data indicating an inner area at a predetermined distance from a boundary between the document area and the outside area in the second mode. According to aspect M, image data to be acquired contains no black streak produced by a shadow of the edge of the document and existing in a periphery of the image of the document.

### Aspect N

An image forming apparatus, such as the copier 1, includes: the reading device, such as the reading device 6, according to any one of aspects A to M to read a document, such as the document sheet S and the card C; and an image forming unit, such as the image forming unit 3, to form an image based on image data indicating a document read by the reading device. According to aspect N, demands from both a user desiring to print image data including the document area and the outside area outside the document area, and a user desiring to print image data indicating the area not including the outside area can be met.

## Claims

1. A reading device (6) comprising:
a feeder (52a, 52b, 52c, 52d, 52e, 52f, 57) to feed a document and
a reading unit (45, 69, 70) to read the document fed by the feeder (52a, 52b, 52c, 52d, 52e, 52f, 57);
**characterized by** comprising:
an image data acquisition unit (301) to acquire image data of the document fed by the feeder (52a, 52b, 52c, 52d, 52e, 52f, 57) and read by the reading unit, in a mode selected in accordance with a predetermined selection condition from a plurality of modes that includes a first mode for acquiring image data including a document area of the document and an outside area other than the document area and a second mode for acquiring image data of an area not including the outside area, by controlling the operations of the reading unit (45, 69, 70).

2. The reading device (6) according to claim 1, further comprising a selector (200) to select a mode,
wherein the image data acquisition unit (301) acquires the image data in a mode selected from the first mode and the second mode by the selector.

3. The reading device (6) according to claim 2,
wherein the first mode includes a card reading mode for reading a document in a form of a card.

4. The reading device (6) according to claim 2,
wherein the first mode includes a margin acquisition mode for reading a document and a margin portion of the document.

5. The reading device (6) according to claim 2,
wherein the first mode includes a thick sheet reading mode for reading a document having a thickness equal to or larger than a predetermined thickness.

6. The reading device (6) according to claim 2,
wherein the first mode includes a small size document reading mode for reading a document of a size equal to or smaller than a predetermined size.

7. The reading device (6) according to claim 1, further comprising a determination unit (104, 105) to determine a type of the document,
wherein the image data acquisition unit (301) acquires the image data in a mode selected from the first mode and the second mode in accordance with a determination result obtained by the determination unit (104, 105).

8. The reading device (6) according to claim 7,
wherein the determination unit (104, 105) is a thickness detector (104) to detect a thickness of the document, and the image data acquisition unit (301) acquires the image data in the first mode when the thickness of the document detected by the thickness detector is equal to or larger than a predetermined thickness.

9. The reading device (6) according to claim 7,
wherein the determination unit (104, 105) is a size detector (105) to detect a size of the document, and the image data acquisition unit (301) acquires the image data in the first mode when the size of the document detected by the size detector is equal to or smaller than a predetermined size.

10. The reading device (6) according to claim 9, further comprising:
a first setting portion (5b) to set a document of a size equal to or smaller than the predetermined size; and
a second setting portion to set a document of a size larger than the predetermined size,
wherein the size detector (105) detects that a size of the document fed by the feeder is equal to or smaller than the predetermined size when the document is set at the first setting portion, and detects that the size of the document fed by the feeder is larger than the predetermined size when the document is set at the second setting portion.

11. The reading device (6) according to any one of claims 1 to 10, further comprising:
a setting portion (5a, 5b) to set the document;
an ejecting portion (56) to eject the document; and
a feeding path portion (61) substantially linearly extending from a reading position of the reading unit (45) to the ejecting portion (56),
wherein the setting portion (5a, 5b) is disposed on a line linearly extending upstream of the feeding path portion (61) from the reading position in a direction in which the document is fed from the setting portion (5a, 5b).

12. The reading device (6) according to any one of claims 1 to 10, further comprising:
a setting portion (51) to set the document;
a feeding path portion (63) substantially linearly extending from the setting portion (51) to a reading position of the reading unit (45); and
an ejecting portion (58) for the document disposed on a line linearly extending downstream of the feeding path portion from the reading position in a direction in which the document is fed from the setting portion (51).

13. The reading device (6) according to any one of claims 1 to 12,
wherein the image data acquisition unit (301) acquires image data of an inner area at a predetermined distance from a boundary between the document area and the outside area in the second mode.

14. An image forming apparatus comprising:
the reading device (6) according to any one of claims 1 to 13 to read the document; and
an image forming unit (3) to form an image based on the image data of the document read by the reading device (6).

## Patentansprüche

1. Lesevorrichtung (6), umfassend:
eine Zuführvorrichtung (52a, 52b, 52c, 52d, 52e, 52f, 57) zum Zuführen eines Dokuments und
eine Leseeinheit (45, 69, 70) zum Lesen des von der Zuführvorrichtung (52a, 52b, 52c, 52d, 52e, 52f, 57) zugeführten Dokuments;
**dadurch gekennzeichnet, dass** sie Folgendes umfasst:
eine Bilddatenerfassungseinheit (301) zum Erfassen von Bilddaten des von der Zuführvorrichtung (52a, 52b, 52c, 52d, 52e, 52f, 57) zugeführten und von der Leseeinheit gelesenen Dokuments in einem Modus, der in Übereinstimmung mit einer vorbestimmten Auswahlbedingung aus einer Vielzahl von Modi ausgewählt wird, umfassend einen ersten Modus zum Erfassen von Bilddaten, die einen Dokumentenbereich des Dokuments und einen anderen Außenbereich als den Dokumentenbereich umfassen, und einen zweiten Modus zum Erfassen von Bilddaten eines Bereichs, der den Außenbereich nicht umfasst, durch Steuern der Vorgänge der Leseeinheit (45, 69, 70).

2. Lesevorrichtung (6) nach Anspruch 1, ferner umfassend eine Auswahlvorrichtung (200) zur Auswahl eines Modus,
wobei die Bilddatenerfassungseinheit (301) die Bilddaten in einem Modus erfasst, der durch die Auswahlvorrichtung aus dem ersten Modus und dem zweiten Modus ausgewählt wird.

3. Lesevorrichtung (6) nach Anspruch 2,
wobei der erste Modus einen Kartenlesemodus zum Lesen eines Dokuments in Form einer Karte umfasst.

4. Lesevorrichtung (6) nach Anspruch 2,
wobei der erste Modus einen Randerfassungsmodus zum Lesen eines Dokuments und eines Randabschnitts des Dokuments umfasst.

5. Lesevorrichtung (6) nach Anspruch 2,
wobei der erste Modus einen Dickblattlesemodus zum Lesen eines Dokuments mit einer Dicke, die gleich oder größer als eine vorbestimmte Dicke ist, umfasst.

6. Lesevorrichtung (6) nach Anspruch 2,
wobei der erste Modus einen Kleinformat-Dokumentenlesemodus zum Lesen eines Dokuments mit einer Größe, die gleich oder kleiner als eine vorbestimmte Größe ist, umfasst.

7. Lesevorrichtung (6) nach Anspruch 1, ferner umfassend eine Bestimmungseinheit (104, 105) zum Bestimmen einer Art des Dokuments,
wobei die Bilddatenerfassungseinheit (301) die Bilddaten in einem Modus erfasst, der aus dem ersten Modus und dem zweiten Modus in Übereinstimmung mit einem durch die Bestimmungseinheit (104, 105) erhaltenen Bestimmungsergebnis ausgewählt wird.

8. Lesevorrichtung (6) nach Anspruch 7,
wobei die Bestimmungseinheit (104, 105) ein Dickendetektor (104) zum Ermitteln einer Dicke des Dokuments ist und die Bilddatenerfassungseinheit (301) die Bilddaten in dem ersten Modus erfasst, wenn die von dem Dickendetektor ermittelte Dicke des Dokuments gleich oder größer als eine vorbestimmte Dicke ist.

9. Lesevorrichtung (6) nach Anspruch 7,
wobei die Bestimmungseinheit (104, 105) ein Größendetektor (105) zum Ermitteln einer Größe des Dokuments ist und die Bilddatenerfassungseinheit (301) die Bilddaten in dem ersten Modus erfasst, wenn die von dem Größendetektor ermittelte Größe des Dokuments gleich oder kleiner als eine vorbestimmte Größe ist.

10. Lesevorrichtung (6) nach Anspruch 9, ferner umfassend:
einen ersten Einstellabschnitt (5b) zum Einstellen eines Dokuments einer Größe, die gleich oder kleiner als die vorbestimmte Größe ist; und
einen zweiten Einstellabschnitt zum Einstellen eines Dokuments einer Größe, die größer als die vorbestimmte Größe ist,
wobei der Größendetektor (105) ermittelt, dass eine Größe des von der Zuführvorrichtung zugeführten Dokuments gleich oder kleiner als die vorbestimmte Größe ist, wenn das Dokument an dem ersten Einstellabschnitt eingestellt wird, und ermittelt, dass die Größe des durch die Zuführvorrichtung zugeführten Dokuments größer als die vorbestimmte Größe ist, wenn das Dokument an dem zweiten Einstellabschnitt eingestellt wird.

11. Lesevorrichtung (6) nach einem der Ansprüche 1 bis 10, ferner umfassend:
einen Einstellabschnitt (5a, 5b) zum Einstellen des Dokuments;
einen Auswurfabschnitt (56) zum Auswerfen des Dokuments; und
einen Zuführwegabschnitt (61), der sich im Wesentlichen linear von einer Leseposition der Leseeinheit (45) zu dem Auswurfabschnitt (56) erstreckt,
wobei der Einstellabschnitt (5a, 5b) an einer Linie angeordnet ist, die sich linear stromaufwärts des Zuführwegabschnitts (61) von der Leseposition in eine Richtung erstreckt, in der das Dokument von dem Einstellabschnitt (5a, 5b) zugeführt wird.

12. Lesevorrichtung (6) nach einem der Ansprüche 1 bis 10, ferner umfassend:
einen Einstellabschnitt (51) zum Einstellen des Dokuments;
einen Zuführwegabschnitt (63), der sich im Wesentlichen linear von dem Einstellabschnitt (51) zu einer Leseposition der Leseeinheit (45) erstreckt; und
einen Auswurfabschnitt (58) für das Dokument, angeordnet an einer Linie, die sich linear stromabwärts des Zuführwegabschnitts von der Leseposition in eine Richtung erstreckt, in der das Dokument von dem Einstellabschnitt (51) zugeführt wird.

13. Lesevorrichtung (6) nach einem der Ansprüche 1 bis 12,
wobei die Bilddatenerfassungseinheit (301) Bilddaten eines Innenbereichs in einem vorbestimmten Abstand von einer Grenze zwischen dem Dokumentenbereich und dem Außenbereich in dem zweiten Modus erfasst.

14. Bilderzeugungsvorrichtung, umfassend:
die Lesevorrichtung (6) nach einem der Ansprüche 1 bis 13 zum Lesen des Dokuments; und
eine Bilderzeugungseinheit (3) zum Erzeugen eines Bilds beruhend auf den Bilddaten des von der Lesevorrichtung (6) gelesenen Dokuments.

## Revendications

1. Dispositif de lecture (6) comprenant :
un dispositif d'alimentation (52a, 52b, 52c, 52d, 52e, 52f, 57) pour alimenter un document et
une unité de lecture (45, 69, 70) pour lire le document alimenté par le dispositif d'alimentation (52a, 52b, 52c, 52d, 52e, 52f, 57) ;
**caractérisé en ce qu'**il comprend :
une unité d'acquisition de données d'image (301) pour acquérir des données d'image du document alimenté par le dispositif d'alimentation (52a, 52b, 52c, 52d, 52e, 52f, 57) et lu par l'unité de lecture, dans un mode sélectionné conformément à une condition de sélection prédéterminée à partir d'une pluralité de modes qui comprend un premier mode pour acquérir des données d'image comprenant une zone de document du document et une zone extérieure autre que la zone de document et un second mode pour acquérir des données d'image d'une zone ne comprenant pas la zone extérieure, en commandant les opérations de l'unité de lecture (45, 69, 70).

2. Dispositif de lecture (6) selon la revendication 1, comprenant en outre un sélecteur (200) pour sélectionner un mode,
dans lequel l'unité d'acquisition de données d'image (301) acquiert les données d'image dans un mode sélectionné parmi le premier mode et le second mode par le sélecteur.

3. Dispositif de lecture (6) selon la revendication 2,
dans lequel le premier mode comprend un mode de lecture de carte pour lire un document sous la forme d'une carte.

4. Dispositif de lecture (6) selon la revendication 2,
dans lequel le premier mode comprend un mode d'acquisition de marge pour lire un document et une partie de marge du document.

5. Dispositif de lecture (6) selon la revendication 2,
dans lequel le premier mode comprend un mode de lecture de feuille épaisse pour lire un document ayant une épaisseur égale ou supérieure à une épaisseur prédéterminée.

6. Dispositif de lecture (6) selon la revendication 2,
dans lequel le premier mode comprend un mode de lecture de document de petite taille pour lire un document d'une taille égale ou inférieure à une taille prédéterminée.

7. Dispositif de lecture (6) selon la revendication 1, comprenant en outre une unité de détermination (104, 105) pour déterminer un type de document,
dans lequel l'unité d'acquisition de données d'image (301) acquiert les données d'image dans un mode sélectionné parmi les le premier mode et le second mode selon un résultat de détermination obtenu par l'unité de détermination (104, 105).

8. Dispositif de lecture (6) selon la revendication 7,
dans lequel l'unité de détermination (104, 105) est un détecteur d'épaisseur (104) pour détecter une épaisseur du document, et l'unité d'acquisition de données d'image (301) acquiert les données d'image dans le premier mode lorsque l'épaisseur du document détectée par le détecteur d'épaisseur est égale ou supérieure à une épaisseur prédéterminée.

9. Dispositif de lecture (6) selon la revendication 7,
dans lequel l'unité de détermination (104, 105) est un détecteur de taille (105) pour détecter une taille du document, et l'unité d'acquisition de données d'image (301) acquiert les données d'image dans le premier mode lorsque la taille du document détecté par le détecteur de taille est égale ou inférieure à une taille prédéterminée.

10. Dispositif de lecture (6) selon la revendication 9, comprenant en outre :
une première partie de réglage (5b) pour définir un document d'une taille égale ou inférieure à la taille prédéterminée ; et
une seconde partie de réglage pour définir un document d'une taille plus grande que la taille prédéterminée,
dans lequel le détecteur de taille (105) détecte qu'une taille du document alimenté par le dispositif d'alimentation est égale ou inférieure à la taille prédéterminée lorsque le document est placé au niveau de la première partie de réglage, et détecte que le format du document alimenté par le dispositif d'alimentation est plus grand que le format prédéterminé lorsque le document est placé au niveau de la seconde partie de réglage.

11. Dispositif de lecture (6) selon l'une quelconque des revendications 1 à 10, comprenant en outre:
une partie de réglage (5a, 5b) pour fixer le document ;
une partie d'éjection (56) pour éjecter le document ; et
une partie de chemin d'alimentation (61) s'étendant sensiblement linéairement à partir d'une position de lecture de l'unité de lecture (45) à la partie d'éjection (56),
dans lequel la partie de réglage (5a, 5b) est disposée sur une ligne s'étendant linéairement en amont de la partie de chemin d'alimentation (61) à partir de la position de lecture dans une direction dans laquelle le document est alimenté à partir de la partie de réglage (5a, 5b).

12. Dispositif de lecture (6) selon l'une quelconque des revendications 1 à 10, comprenant en outre:
une partie de réglage (51) pour fixer le document ;
une partie de chemin d'alimentation (63) s'étendant sensiblement linéairement à partir de la partie de réglage (51) à une position de lecture de l'unité de lecture (45) ; et
une partie d'éjection (58) pour le document disposée sur une ligne s'étendant linéairement en aval de la partie de chemin d'alimentation à partir de la position de lecture dans une direction dans laquelle le document est alimenté à partir de la partie de réglage (51).

13. Dispositif de lecture (6) selon l'une quelconque des revendications 1 à 12,
dans lequel l'unité d'acquisition de données d'image (301) acquiert des données d'image d'une zone intérieure à une distance prédéterminée à partir d'une limite entre la zone de document et la zone extérieure dans le second mode.

14. Appareil de formation d'images comprenant :
le dispositif de lecture (6) selon l'une quelconque des revendications 1 à 13 pour lire le document ; et
une unité de formation d'image (3) pour former une image sur la base des données d'image du document lu par le dispositif de lecture (6).
